(19) Europäisches Patentamt
European Patent Office
Office européen des brevets

(11) Publication number: **0 445 076 B1**

(12) # EUROPEAN PATENT SPECIFICATION

(45) Date of publication of patent specification: **09.08.95**

(51) Int. Cl.⁶: **D06M 13/352**, D06M 15/01, D06P 1/16, D06P 1/46, D06P 1/642, B01F 17/50, //D06M101:32,D06M101:34

(21) Application number: **91810113.0**

(22) Date of filing: **20.02.91**

The file contains technical information submitted after the application was filed and not included in this specification

(54) **Stable dispersions of benzotriazole ultra-violet absorbing agents.**

(30) Priority: **02.03.90 US 487564**
**27.04.90 US 515979**
**13.06.90 US 537393**

(43) Date of publication of application:
**04.09.91 Bulletin 91/36**

(45) Publication of the grant of the patent:
**09.08.95 Bulletin 95/32**

(84) Designated Contracting States:
**CH DE FR GB LI**

(56) References cited:
**WO-A-88/02042**
**DE-A- 3 706 915**

(73) Proprietor: **CIBA-GEIGY AG**
**Klybeckstrasse 141**
**CH-4002 Basel (CH)**

(72) Inventor: **Cooke, Thomas W., Dr.**
**3706 Sage Drive**
**Greensboro, N.C. 27410 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 445 076 B1

## Description

This invention relates to stable dispersions of benzotriazole ultraviolet (U.V.) absorbing agents and a method of dispersing the benzotriazole U.V. absorbing agents.

Benzotriazole U.V. absorbing agents are often co-applied with disperse dyes to textiles to improve light-fastness. The U.V. absorbing agent is generally applied to the textile in the form of an aqueous dispersion, together with disperse dyes, in pressurized water systems at 110-130°C. Under these high temperature conditions, ordinary dispersing agents, such as unmodified ligninsulfonates and formaldehyde condensates of naphthalenesulfonates as disclosed for example in EP-A-0 354 174, desorb from the U.V. absorbing agent resulting in undispersed deposits on the textile. EP-A-0 354 174 discloses aqueous compositions which contain as dispersing agent unmodified ligninsulfonates and formaldehyde condensates of naphthalenesulfonates, whereas the instant compositions contain formaldehyde condensates of ligninsulfonates.

This problem is particularly severe in applications where the textile is held in a fixed position with the dyebath solution being pumped through the textile. Under these conditions any undispersed U.V. absorbing agent is filtered out, producing deposits. Beam and package application methods are examples where the problem is particularly severe.

It has been discovered that formaldehyde condensates of ligninsulfonates can impart the required high temperature stability to dispersions of benzotriazole U.V. absorbing agents.

The present invention therefore relates to a method of dispersing benzotriazole ultraviolet absorbing agents which comprises the step of mixing said benzotriazole ultraviolet absorbing agents with a formaldehyde condensate of lignin sulfonate.

The dispersing agents utilized in this invention are formaldehyde condensates of ligninsulfonate. Preferred dispersing agents are polymers of ligninsulfonates (in their various salt forms) with formaldehyde and phenol or hydroxy benzyl alcohols having the formula

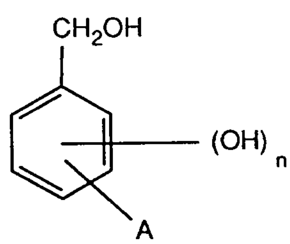

wherein n is 1,2 or 3 and A is a substituent selected from the group consisting of hydrogen, $C_1$-$C_4$alkyl and hydroxy methyl.

Most preferred formaldehyde condensate of lignin sulfonate is lignosulfonic acid, sodium salt, polymer with formaldehyde and phenol.

The modified ligninsulfonate dispersants of this invention can be distinguished from ordinary ligninsulfonates by their ability to keep aqueous benzotriazole in suspension in filtration tests at 110-130°C in laboratory pressurized water test dyeing equipment. The Pretema laboratory dyeing machine is an example of laboratory pressurized water test equipment.

Although ligninsulfonic acid, sodium salt, polymer with formaldehyde and phenol is known in the preparation of disperse dyes, its use for producing stable dispersions of benzotriazole U.V. absorbing agents has not previously been reported.

The addition of these modified ligninsulfonates to the benzotriazole absorbing agents greatly reduces or entirely eliminates the filtration deposits usually seen in the application of benzotriazole U.V. absorbing agents to textiles by the beam and package application methods.

Beam dyeing involves woven or knitted fabric wrapped tightly around a cylinder with holes in it (the beam). The dye liquor is pumped through the wrapped fabric under pressure and heat.

Package dyeing is similar to beam dyeing, but involves yarn rather than fabric.

In addition, the modified ligninsulfonate dispersing agents utilized by the present invention produce dispersions which exhibit little sedimentation and virtually no particle size growth (i.e. recrystallization) even after many months of storage at elevated temperatures. This increased storage stability is an additional advantage of the present invention.

Benzotriazole U.V. absorbing agents are well-known in the art for preventing damage to textiles due to exposure to U.V. light. Benzotriazole U.V. absorbing are described in US-A-3,004,896, US-A-3,189,615, and

US-A-4,141,903.

Preferred benzotriazole U.V. absorbing agents are 2-aryl-4,5-arylo-1,2,3-triazole compounds as described in US-A-3,004,896. Especially preferred benzotriazole U.V. absorbing agents are those in which the 2-aryl group is a phenyl radical having a free hydroxyl group in the 2-position with regard to the linkage with the triazole ring. It is preferable that the phenyl radical be further substituted in the 2 and 5 or in the 4 and 5 positions by lower alkyl and/or chlorine.

An especially useful benzotriazole U.V. absorbing agent is 2-(3'-tert-butyl-2'-hydroxy-5'-methylphenyl)-5-chloro-benzotriazole.

The present invention also relates to a method of protecting textile from ultraviolet light, which comprises the step of contacting said textile with an aqueous dispersion comprising:

(a) a benzotriazole U.V. absorbing agent, and

(b) a formaldehyde condensate of ligninsulfonate,

with the proviso that said aqueous dispersion is stable for 1 month at a temperature of 60 ° C and does not filter out in laboratory filtration tests in pressurized water systems at temperaturs of 110 to 130 ° C.

Preferably the benzotriazole ultraviolet absorbing agent (a) is 2-(3'-tert-butyl-2'-hydioxy-5'-methylphenyl)-5-chloro-benzotriazole and preferably the formaldehyde condensate of ligninsulfonate (b) is lignosulfonic acid, sodium salt, polymer with formaldehyde and phenol.

The textile to be treated is contacted with said aqueous dispersion by a means in which said textile is held in a fixed position and said aqueous dispersion is pumped through said textile.

Te contact between said textile and said aqueous dispersion is accomplished by means of a beam dyeing machine, a package dyeing machine, a jet-dyeing machine, by means of spraying or said textile is contacted by said aqueous dispersion by means in which said textile is circulated in a stationary bath.

The term textile as used in this application is meant to include various fibers, yarns and fabrics. Among the textiles to be protected are those composed of polyester and polyamide. The present invention is especially useful for improving the light-fastners of polyester automotive fabrics.

The present invention also relates to an aqueous dispersion for the treatment of textiles comprising:

(a) a benzotriazole U.V. absorbing agent, and

(b) a formaldehyde condensate of ligninsulfonate;

with the proviso that said dispersion is stable at 60 ° C for 1 month and does not filter out in laboratory filtration tests in pressurized water systems at temperatures of 110 to 130 ° C.

Preferably the formaldehyde condensate of ligninsulfonate is lignosulfonic acid, sodium salt, polymer with formaldehyde and phenol, and preferred benzotriazole U.V. absorbing agent is 2-(3'-tert-butyl-2'-hydroxy-5'-methylphenyl)-5-chlorobenzoniazole.

Another preferred benzotriazole U.V. absorbing agent of the aqueous dispersion of the present invention is a 2-aryl-4,5-arylo-1,2,3-triazole wherein the 2-aryl group is a phenyl radical having a free hydroxyl group in the 2-position with regard to the linkage with the triazole ring.

The aqueous dispersions of the present application comprising from about 10 to 60 percent by weight of benzotriazole U.V. absorbing agent and from about 3 to 24 percent by weight of modified ligninsulfonate dispersing agent. Preferably the compositions will contain about 25 to 35 percent by weight of the benzotriazole U.V. absorbing agent and about 9 to 13 percent by weight of modified ligninsulfonate.

Generally, the ratio of benzotriazole U.V. absorbing agent to modified ligninsulfonate dispersing agent will be in the range of about 2:1 to 4:1; preferably 2.5:1 to 3.0:1.

In addition to the benzotriazole U.V. absorbing agent and modified ligninsulfonate dispersing agent, the compositions of this application can contain typically used dyebath auxiliaries; such as biocides, preservatives, freeze-thaw stabilizers (e.g. glycols), thickeners, wetting agents, defoamers and buffers.

The dispersions of the present invention can be prepared by dissolving component (b) in water together with any dyebath auxiliaries. The component (a) as an insoluble powder, is added slowly with vigorous agitation to form a wetted-out slurry. This slurry is then ground, for example, in a sand-mill or a ball-mill, until the average particle size is about 1.5 microns or less. The dispersion formed is a free-flowing, opaque liquid which dilutes readily in water with gentle stirring.

The pH of the dispersion is generally adjusted to be in the range of 4-9.

This invention is illustrated by, but not limited to, the following examples.

Example 1:

| Ingredients: | A | B |
|---|---|---|
| Water | 66.0 % | 55.85 % |
| 2-(3'-tert-butyl-2'-hydroxy-5'-methylphenyl)-5-chlorobenzotriazole | 25.00 % | 25.00 % |
| lignosulfonic acid, sodium salt, polymer with formaldehyde and phenol | 9.00 % | 9.00 % |
| Propylene glycol | -- | 10.00 % |
| Preservative/biocide | -- | 0.15 % |
| Method of Preparation: | 300 g batch, continuous grinding (20 hours) in laboratory sand-mill with 20-30 mesh sand. | 4000 g batch, 17 passes thru Dyno-mill pilot sand-mill with 1 mm glass beads. |
| Storage Stability: | | |
| Initial Particle Size - 50 % value (by Granulometre) | < 0.6 microns | < 0.6 microns |

| | | |
|---|---|---|
| Aged at 40°C for 3 months: | | |
| Liquid (serum) separation | 5 % | 10 % |
| Solid sedimentation | 0 % | 0 % |
| Aged at 60°C for 3 months: | | |
| Liquid (serum) separation | 5 % | 15 % |
| Solid sedimentation | 0 % | 0 % |
| Particle size | < 0.6 microns | < 0.6 microns |

Performance*:

1.2 g of 2-(3'-tert-butyl-2'-hydroxy-5'-methylphenyl)-5-chlorobenzotriazole dispersions at 25 % actives, for 0.3 g actives on 30 g PES fabric (for 1 % 2-(3'-tert-butyl-2'-hydroxy-5'-methylphenyl)-5-chlorobenzotriazole actives on weight of fabric) in 300 g total dyebath solution (10 to 1 liquor ratio)

| | | |
|---|---|---|
| · Heat to 110°C, hold 30 min., cool to 80°C | good, no deposits | good, no deposits |
| · Heat to 120°C, hold 30 min., cool to 80°C | good, no deposits | good, no deposits |
| · Heat to 130°C, hold 30 min., cool to 80°C | good, no deposits | good, no deposits |

* Filtration deposit test in "Pretema" laboratory beam dyeing machine on 30 g fabric samples (pre-dyed black polyester) with typically used dye-bath auxiliaries (0.4 % o.w.f. of a sodium naphthalene sulfonic acid condensate dispersing agent and 1 % o.w.f. of an ethoxylated fatty acid leveling agent).

For comparison, a similar 2-(3'-tert-butyl-2'-hydroxy-5'-methylphenyl)-5-chlorobenzotriazole dispersion made with an ordinary, unmodified, lignin-sulfonate dispersant (i.e., ammonium-lignosulfonate) showed severe filtration deposits on the fabric in the Pretema machine test, under the same conditions, especially at 110° and 120°C.

Example 2: Formulations (C) and (D) with the following compositions are prepared and utilized in Examples (3)-(6). Formulation (D) is a control prepared with unmodified lignin-sulfonate dispersant.

| Ingredients (grams/liter) | C | D |
|---|---|---|
| 2-(3'-tert-butyl-2'-hydroxy-5'-methylphenyl)-5-chlorobenzotri azole | 25.0 | 33.0 |
| Propylene glycol | 10.0 | -- |
| Ethylene glycol | -- | 10.00 |
| lignosulfonic acid, sodium salt, polymer with formaldehyde and phenol | 9.0 | -- |
| ammonium-lignosulfonate | -- | 12.0 |
| 1,2-benzoisothiazolin-3-one | 0.15 | 0.15 |
| Water | Rest | Rest |

Example 3: The formulations of Example 2 are tested for particle size and recrystallization with the following results:

| | C | D |
|---|---|---|
| Particle size (initial) | < 1 µm | < 1 µm |
| Recrystallization | | |
| 3 months at 25 °C | none | none |
| 3 months at 40 °C | none | 1-2 µm |
| 1 month at 60 °C | none | 1-2 µm |

Example 4:

Filter Test (2/4 filter paper configuration in AATCC method 146-1989)

| | C | D |
|---|---|---|
| 3 months at 25 °C | OK | OK |
| 3 months at 40 °C | OK | OK |
| 1 month at 60 °C | OK | Fails |

Examples 5-7: The performance of the formulations of Example 2 was tested in beam or package application methods in Examples 5-7.

In each of Examples 5-7, a dyebath solution was prepared by adding the indicated dyes and the U.V. absorber dispersion into a dyebath containing the described dye system (auxiliaries). All percentages are based on the weight of fiber.

The U.V. absorber dispersions of Example 2 are added to the dyebath in the amount necessary to prepare a dyebath containing 1 % 2-(3'-tert-butyl-2'-hydroxy-5'-methylphenyl)-5-chlorobenzotriazole based on the weight of fiber. This is equivalent to 4 % of formulation (C) or 3.0 % of formulation (D).

Example 5 - Package Machine

| | |
|---|---|
| Machine: | Callibaut de blicqui, capacity 150 liters |
| Substrate: | PES-DACRON yarn, 6 packages, total weight 9.917 kg |
| Dye System: | 5.0 g/l sodium salt of condensed naphthalene sulfonic acid |
| | 5.0 g/l glycol diester |

| | |
|---|---|
| | 2.5 g/l Acetic acid (20 %) |
| Liquor ratio: | 1:15 |
| Dyes: | 1.7689 % Terasil Yellow GWL |
| | 1.5300 % Palanil Red FFN-Y |
| | 0.7420 % Palanil Pink REL 200 % |
| | 0.4051 % Terasil Blue E-LF 27 |
| | 0.1002 % Poly. Blue FS 200 % |
| Dye cycle: | Program AUTO: load chemicals at 70 °C heat to 133 °C within |
| | 30 min. (3 holding times 6 min. each at 95, 105, 112 °C) |
| | dye 30 minutes at 133 °C |
| | drop hot at 133 °C |
| Scour: | 1.75 g/l Caustic |
| | 1.75 g/l reducing agent |

The packages were broken and knitted to socks with yarn from inside, middle and outside to check for depositions and levelness of the dyeing.

| RESULTS: | C | D |
|---|---|---|
| Deposits<br>Levelling | No<br>Poor | Yes<br>Poor |

Example 6 - Beam Machine (pilot)

| | |
|---|---|
| Machine: | Bentley-Pegg beam machine, capacitiy 208 liters plus expansion tank |
| Substrate: | BASF-DACRON fabric, total weight 19.50-20.00 kg |
| Pre-scour: | Not applied |
| Dye System: | 0.4 % Sodium salt of condensed naphthalene sulfonic |
| | 1.0 % Non-ionic levelling agent |
| | 1.0 % Acetic acid (28 %) |
| Liquor ratio: | Approximately 1:10 |
| Dyes: | 0.34 % Terasil Yellow GWL new |
| | 0.26 % Terasil Brilliant Pink 3G |
| | 0.719 % Blue E-GLF |
| | 0.037 % Terasil Blue BGE |
| Dye cycle: | Load chemicals at 120 °F (50 °C) and run for 10 minutes; |
| | Load dyes at 120 °F (50 °C) and run for 5 minutes |
| | Heat to 265 °F (130 °C) at 3 °F/min. |
| | Dye at 265 °F for 45 minutes, inside-out |
| | Cool to 200 °F at 5 °F/min., then to 160 °F at 5 °F/min. |
| | Drop bath and apply overflow wash |
| Afterscour: | Only for middle of beam after samples were taken from top and bottom |
| | 0.5 % Sodium ether-alcohol sulfate |
| | 1.0 % Dialkyl ester of sodium sulfosuccinate |
| | 2.0 % Caustic (50 %) |
| | 3.0 % Na-hydro sulfite injet machine, all fabrics sewed together |
| Drying: | At 250 °F on Famatex frame |

Before afterscouring, samples were taken from the top and bottom of the beam to check for depositions.

| RESULTS: | C | D |
|---|---|---|
| Deposits | Few | Many |

Example 7 - Beam Dyeing Machine

| | |
|---|---|
| Machine: | Bentley-Pegg beam machine, capacity approximately 1200 liters |
| Substrate: | On the bottom: Guilford fabric - Polyester<br>On top of it: BASF-PES-DACRON, total weight 75 kg |
| Pre-scour: | 1.0 g/l Soda ash<br>2.0 g/l wetting agent, e.g. the commercially available Ritescour TE<br>2.0 g/l wetting agent, e.g. the commercially available Tanapon INF at 200 °F for 30 minutes, drop and overflow wash |
| Dye System: | 0.4 % Sodium salt of condensed naphthalene sulfonic<br>1.75 % Non-ionic levelling agent<br>2.8 % Acetic acid (28 %) to reach pH = 4.5 |
| Liquor ratio: | Approximately 1:15, beam was only filled to half its capacity to run trials with two different materials. |
| Dyes: | 0.252 % Terasil Yellow GWL new<br>0.137 % Terasil Pink 2 GLA<br>0.146 % Terasil Blue BFL |
| Dye-cycle: | Load chemicals at 120 °F (50 °C) and run for 10 minutes;<br>Load dyes at 120 °F (50 °C) and run for 5 minutes<br>Heat to 265 °F (130 °C) at 3 °F/min.<br>Dye at 265 °F for 45 minutes, inside-out<br>Cool to 200 °F at 2 °F/min., then to 160 °F at 3 °F/min.<br>Rinse 10 minutes at 100 °F (38 °C) |
| Afterscour: | As in Example 6, 15 minutes at 160 °F (71 °C) |
| Drying: | At 250 °F on Famatex frame |

The amount of deposits on the non-woven polypropylene liner (Typar material) that covers the very inside of the beam and the first layers of fabric are evaluated for deposits.

RESULTS:

| | |
|---|---|
| Formulation (C): | Some deposits on Typar liner. Some minor white spots on first layer of wrapped fabric. |
| Formulation (D): | No deposits on Typr liner. Heavy deposits on beams outside edges and on sides of wrapped roll of fabric. |

## Claims

**1.** A method of dispersing benzotriazole ultraviolet absorbing agents which comprises the step of mixing said benzotriazole ultraviolet absorbing agents with a formaldehyde condensate of lignin sulfonate, with the provisio that said aqueous dispersion is stable for 1 month at a temperature of 60 °C and does not filter out in laboratory filtration tests in pressurized water systems at temperatures of 110 to 130 °C.

**2.** A method of claim 1 wherein said formaldehyde condensate of lignin sulfonate is a polymer of ligninsulfonate with formaldehyde and a hydroxyl benzyl alcohol compound having the formula

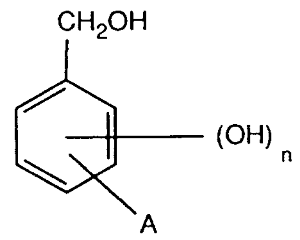

wherein n is 1,2 or 3 and A is a substituent selected from the group consisting of hydrogen, alkyl (with 1-4 carbon atoms), and hydroxy methyl.

**3.** A method of claim 1 wherein said formaldehyde condensate of lignin sulfonate is a polymer of ligninsulfonate with formaldehyde and phenol.

**4.** A method of claim 1 or 3 wherein said formaldehyde condensate of lignin sulfonate is lignosulfonic acid, sodium salt, polymer with formaldehyde and phenol.

**5.** A method of claim 1 wherein said benzotriazole ultraviolet absorbing agent is a 2-aryl-4,5-arylo-1,2,3-triazole wherein the 2-aryl group is a phenyl radical having a free hydroxyl group in the 2-position with regard to the linkage with the triazole ring.

**6.** A method of claim 5 wherein said phenyl radial is further substituted in the 2 and 5 or in the 4 and 5 positions by lower alkyl and chlorine.

**7.** A method of claim 6 wherein said benzotriazole ultraviolet absorbing agent is 2-(3'-tert-butyl-2'-hydroxy-5'-methylphenyl)-5-chloro-benzotriazole.

**8.** A method for protecting textiles from ultraviolet light which comprises the step of contacting said textile with an aqueous dispersion comprising
(a) a benzotriazole U.V. absorbing agent, and
(b) a formaldehyde condensate of ligninsulfonate,
with the proviso that said aqueous dispersion is stable for 1 month at a temperature of 60 ° C and does not filter out in laboratory filtration tests in pressurized water systems at temperaturs of 110 to 130 ° C.

**9.** A method of claim 8 wherein said benzotriazole ultraviolet absorbing agent is 2-(3'-tert-butyl-2'-hydroxy-5'-methylphenyl)-5-chloro-benzotriazole and said formaldehyde condensate of ligninsulfonate is lignosulfonic acid, sodium salt, polymer with formaldehyde and phenol.

**10.** A method of claim 8 or 9 wherein said textile is contacted with said aqueous dispersion by a means in which said textile is held in a fixed position and said aqueous dispersion is pumped through said textile.

**11.** A method of claim 8 or 9 wherein the contact between said textile and said aqueous dispersion is accomplished by means of a beam dyeing machine.

**12.** A method of claim 8 or 9 wherein the contact between said textile and said aqueous dispersion is accomplished by means of a package dyeing machine.

**13.** A method of claim 8 or 9 wherein the contact between said textile and aqueous dispersions is accomplished by means of spraying.

**14.** A method of claim 8 or 9 wherein said textile is contacted by said aqueous dispersion by means in which said textile is circulated in a stationary bath.

**15.** A method of claim 8 or 9 wherein the contact between said textile and said aqueous dispersion is accomplished by means of a jet-dyeing machine.

**16.** An aqueous dispersion for the treatment of textiles comprising:
(a) a benzotriazole U.V. absorbing agent, and
(b) a formaldehyde condensate of ligninsulfonate;
with the proviso that said dispersion is stable at 60 ° C for 1 month and does not filter out in laboratory filtration tests in pressurized water systems at temperatures of 110 to 130 ° C.

**17.** An aqueous dispersion of claim 16 wherein said formaldehyde condensate of lignin-sulfonate is lignosulfonic acid, sodium salt, polymer with formaldehyde and phenol.

**18.** An aqueous dispersion of claim 16 wherein said benzotriazole U.V. absorbing agent is 2-(3'-tert-butyl-2'-hydroxy-5'-methylphenyl)-5-chloro-benzotriazole.

**19.** An aqueous dispersion of claim 18 wherein said benzotriazole U.V. absorbing agent is a 2-aryl-4,5-arylo-1,2,3-triazole wherein the 2-aryl group is a phenyl radical having a free hydroxyl group in the 2-position with regard to the linkage with the triazole ring.

**20.** An aqueous dispersions of one of the claims 16 to 19 comprising from about 10 to 60 percent by weight of benzotriazole U.V. absorbing agent and from about 3 to 24 percent by weight of modified ligninsulfonate dispersing agent.

**Patentansprüche**

**1.** Verfahren zum Dispergieren von Benzotriazol-Ultraviolettabsorptionsmitteln, umfassend den Schritt des Vermischens der Benzotriazol-Ultraviolettabsorptionsmittel mit einem Formaldehydkondensat von Ligninsulfonat, mit der Maßgabe, daß die wäßrige Dispersion während 1 Monat bei einer Temperatur von 60 °C stabil ist und bei Labor-Filtrationstests in unter Druckbefindlichen Wassersystemen bei Temperaturen von 110 bis 130 °C nicht ausfiltert.

**2.** Verfahren nach Anspruch 1, wobei das Formaldehydkondensat von Ligninsulfonat ein Polymer von Ligninsulfonat mit Formaldehyd und einer Hydroxylbenzylalkoholverbindung der Formel

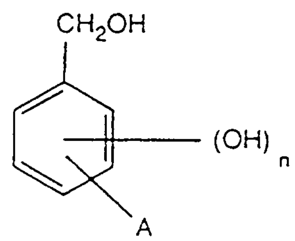

ist, worin n 1, 2 oder 3 ist und A ein aus der Wasserstoff, Alkyl (mit 1 bis 4 Kohlenstoffatomen) und Hydroxymethyl umfassenden Gruppe gewählter Substituent ist.

**3.** Verfahren nach Anspruch 1, wobei das Formaldehydkondensat von Ligninsulfonat ein Polymer von Ligninsulfonat mit Formaldehyd und Phenol ist.

**4.** Verfahren nach Anspruch 1 oder 3, wobei das Formaldehydkondensat von Ligninsulfonat ein Lignosulfonsäurenatriumsalz-Polymer mit Formaldehyd und Phenol ist.

**5.** Verfahren nach Anspruch 1, wobei das Benzotriazol-Ultraviolettabsorptionsmittel ein 2-Aryl-4,5-arylo-1,2,3-triazol ist, worin die 2-Arylgruppe ein Phenylrest mit einer freien Hydroxylgruppe in der 2-Position hinsichtlich der Bindung mit dem Triazolring ist.

**6.** Verfahren nach Anspruch 5, wobei der Phenylrest weiterhin in den 2- und 5- oder in den 4- und 5-Positionen durch Niederalkyl oder Chlor substituiert ist.

**7.** Verfahren nach Anspruch 6, wobei das Benzotriazol-Ultraviolettabsorptionsmittel 2-(3'-tert-Butyl-2'-hydroxy-5'-methylphenyl)-5-chlor-benzotriazolist.

**8.** Verfahren zum Schützen von Textilien gegenüber Ultraviolettlicht, umfassend den Schritt des Kontaktierens der Textilie mit einer wäßrigen Dispersion, umfassend

(a) ein Benzotriazol-UV-Absorptionsmiltel, und

(b) ein Formaldehydkondensat von Ligninsulfonat,

mit der Maßgabe, daß die wäßrige Dispersionwährend 1 Monat bei einer Temperatur von 60 °C stabil ist und bei Labor-Filtrationstests in unter Druck befindlichen Wassersystemen bei Temperaturen von 110 bis 130 °C nicht ausfiltert.

**9.** Verfahren nach Anspruch 8, wobei das Benzotriazol-Ultraviolettabsorptionsmittel 2-(3'-tert-Butyl-2'-hydroxy-5'-methylphenyl)-5-chlor-benzotriazolist und das Formaldehydkondensat von Ligninsulfonat ein

Lignosulfonsäurenatrium-Polymer mit Formaldehyd und Phenol ist.

**10.** Verfahren nach Anspruch 8 oder 9. wobei die Textilie mit der wäßrigen Dispersion mittels einer Einrichtung in Kontakt gebracht wird, bei der die Textilie in einer fixierten Position gehalten und die wäßrige Dispersion durch die Textilie gepumpt wird.

**11.** Verfahren nach Anspruch 8 oder 9, wobei der Kontakt zwischen der Textilie und der wäßrigen Dispersion mittels einer Balkenfärbemaschine bewerkstelligt wird.

**12.** Verfahren nach Anspruch 8 oder 9, wobei der Kontakt zwischen der Textilie und der wäßrigen Dispersion mittels einer Packungsfärbemaschine bewerkstelligt wird.

**13.** Verfahren nach Anspruch 8 oder 9, wobei der Kontakt zwischen der Textilie und der wäßrigen Dispersion mittels Sprühen bewerkstelligt wird.

**14.** Verfahren nach Anspruch 8 oder 9, wobei die Textilie mittels einer Einrichtung, bei der die Textilie in einem stationfären Bad zirkuliert wird, mit der wäßrigen Dispersion in Kontakt gebracht wird.

**15.** Verfahren nach Anspruch 8 oder 9, wobei der Kontakt zwischen der Textilie und der wäßrigen Dispersion mittels einer Strahlfärbemaschine bewerkstelligt wird.

**16.** Wäßrige Dispersion zur Behandlung von Textilien, umfassend:
(a) ein Benzotriazol-UV-Absorptionsmittel, und
(b) ein Formaldehydkondensat von Ligninsulfonat;
mit der Maßgabe, daß die Dispersion während 1 Monat bei 60 °C stabil ist und in Labor-Filtrationstests in unter Druck befindlichen Wassersystemen bei Temperaturen von 110 bis 130 °C nicht ausfiltert.

**17.** Wäßrige Dispersion nach Anspruch 16, wobei das Formaldehydkondensat von Ligninsulfonat ein Lignosulfonsäurenatriumsalz-Polymer mit Formaldehyd und Phenol ist.

**18.** Wäßrige Dispersion nach Anspruch 16, wobei das Benzotriazol-UV-Absorptionsmittel 2-(3'-tert-Butyl-2'-hydroxy-5'-methylphenyl)-5-chlor-benzotriazolist.

**19.** Wäßrige Dispersion nach Anspruch 18, wobei das Benzotriazol-UV-Absorptionsmittel ein 2-Aryl-4,5-arylo-1,2,3-triazol ist, worin die 2-Arylgruppe ein Phenylrest mit einer freien Hydroxylgruppe in der 2-Position hinsichtlich der Bindung mit dem Triazolring ist.

**20.** Wäßrige Dispersionen nach mindestens einem der Ansprüche 16 bis 19, umfassend etwa 10 bis 60 Gew.-% Benzotriazol-UV-Absorptionsmittel und etwa 3 bis 24 Gew.-% eines modifizierten Ligninsulfonat-Dispergiermittels.

**Revendications**

**1.** Procédé de dispersion d'agents absorbeurs de rayonnement ultraviolet, de type benzotriazole, qui comporte l'étape consistant à mélanger lesdits agents absorbeurs de rayonnement ultraviolet, de type benzotriazole, avec un produit de condensation d'un ligninesulfonate et de formaldéhyde, sous réserve que ladite dispersion aqueuse soit stable pendant 1 mois à une température de 60 °C et ne forme pas de dépôts par filtration lors d'essais de filtration en laboratoire dans des systèmes à eau sous pression et à une température de 110-130 °C.

**2.** Procédé conforme à la revendication 1, dans lequel ledit produit de condensation de ligninesulfonate et de formaldéhyde est un polymère à base d'un ligninesulfonate, de formaldéhyde et d'un alcool hydroxybenzylique de formule

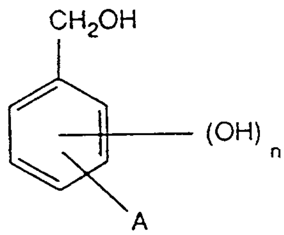

dans laquelle n vaut 1, 2 ou 3 et A représente un substituant choisi dans l'ensemble constitué par un atome d'hydrogène, un groupe alkyle comportant de 1 à 4 atomes de carbone et un groupe hydroxyméthyle.

3. Procédé conforme à la revendication 1, dans lequel ledit produit de condensation de ligninesulfonate et de formaldéhyde est un polymère à base d'un ligninesulfonate, de formaldéhyde et de phénol.

4. Procédé conforme à la revendication 1 ou 3, dans lequel ledit produit de condensation de ligninesulfonate et de formaldéhyde est un polymère à base d'un sel de sodium d'acide ligninesulfonique, de formaldéhyde et de phénol.

5. Procédé conforme à la revendication 1, dans lequel ledit agent absorbeur de rayonnement altraviolet, de type benzotriazole, est un 2-aryl-4,5-arylo-1,2,3-triazole dans lequel le groupe 2-aryle est un groupe phényle portant un groupe hydroxy libre en position 2 par rapport à la liaison qui le relie au cycle triazole.

6. Procédé conforme à la revendication 5, dans lequel ledit groupe phényle porte en outre, en position 2 et 5 ou en position 4 et 5, des substituants alkyle inférieur ou chloro.

7. Procédé conforme à la revendication 6, dans lequel ledit agent absorbeur de rayonnement altraviolet de type benzotriazole est du 2-(3'-t-butyl-2'-hydroxy-5'-méthyl-phényl)-5-chloro-benzotriazole.

8. Procédé de protection de matières textiles contre la lumière ultraviolette, qui comporte l'étape consistant à mettre en contact ladite matière textile avec une dispersion aqueuse contenant (a) un agent absorbeur d'U.V., de type benzotriazole, et (b) un produit de condensation d'un ligninesulfonate et de formaldéhyde, sous réserve que ladite dispersion aqueuse soit stable pendant 1 mois à une température de 60 °C et ne donne pas de dépôts par filtration au cours d'essais de laboratoire réalisés dans des systèmes à eau sous pression et à une température de 110-130 °C.

9. Procédé conforme à la revendication 8, dans lequel ledit agent absorbeur d'U.V., de type benzotriazole, est du 2-(3'-t-butyl-2'-hydroxy-5'-méthyl-phényl)-5-chlorobenzotriazole, et ledit produit de condensation d'un ligninesulfonate et de formaldéhyde est un polymère à base d'un sel de sodium d'acide ligninesulfonique, de formaldéhyde et de phénol.

10. Procédé conforme à la revendication 8 ou 9, dans lequel ladite matière textile est mise en contact avec ladite dispersion aqueuse de telle façon que ladite matière textile est maintenue en position fixe et que ladite dispersion aqueuse traverse ladite matière textile par pompage.

11. Procédé conforme à la revendication 8 ou 9, dans lequel la mise en contact de ladite matière textile et de ladite dispersion aqueuse est réalisée à l'aide d'un appareil de teinture à ensouple.

12. Procédé conforme à la revendication 8 ou 9, dans lequel la mise en contact de ladite matière textile et de ladite dispersion aqueuse est réalisée à l'aide d'un appareil de teinture sur bobines croisées.

13. Procédé conforme à la revendication 8 ou 9, dans lequel la mise en contact de ladite matière textile et de ladite dispersion aqueuse est réalisée par pulvérisation

14. Procédé conforme à la revendication 8 ou 9, dans lequel ladite matière textile est mise en contact avec ladite dispersion aqueuse de telle façon que ladite matière textile circule dans un bain stationnaire.

15. Procédé conforme à la revendication 8 ou 9, dans lequel la mise en contact de ladite matière textile et de ladite dispersion aqueuse est réalisée à l'aide d'un appareil de teinture au jet.

16. Dispersion aqueuse pour le traitement de matières textiles, comprenant :
(a) un agent absorbeur d'U.V., de type benzotriazole, et
(b) un produit de condensation d'un ligninesulfonate et de formaldéhyde,
sous réserve que ladite dispersion soit stable à 60 °C pendant 1 mois et ne donne pas de dépôts par filtration au cours d'essais de laboratoire réalisés dans des systèmes à eau sous pression et à une température de 110-130 °C.

17. Dispersion aqueuse conforme à la revendication 16, dans laquelle ledit produit de condensation d'un ligninesulfonate et de formaldéhyde est un polymère à base d'un sel de sodium d'acide ligninesulfonique, de formaldéhyde et de phénol.

18. Dispersion aqueuse conforme à la revendication 16, dans laquelle ledit agent absorbeur d'U.V., de type benzotriazole, est du 2-(3'-t-butyl-2'-hydroxy-5'-méthylphényl)-5-chloro-benzotriazole.

19. Dispersion aqueuse conforme à la revendication 16, dans laquelle ledit agent absorbeur d'U.V., de type benzotriazole, est un 2-aryl-4,5-arylo-1,2,3-triazole dans lequel le groupe 2-aryle est un groupe phényle portant un groupe hydroxy libre en position 2 par rapport à la liaison qui le relie au cycle triazole.

20. Dispersion aqueuse conforme à l'une des revendications 16 à 19, qui contient d'environ 10 à 60 % en poids d'un agent absorbeur d'U.V., de type benzotriazole, et d'environ 3 à 24 % en poids d'un agent dispersant de type ligninesulfonate modifié.